(19) Europäisches Patentamt
European Patent Office
Office européen des brevets

(11) EP 0 872 526 A1

# (12) EUROPEAN PATENT APPLICATION

(43) Date of publication:
**21.10.1998 Bulletin 1998/43**

(51) Int Cl.$^{6}$: **C09D 5/03**

(21) Application number: **98302958.8**

(22) Date of filing: **16.04.1998**

(84) Designated Contracting States:
**AT BE CH CY DE DK ES FI FR GB GR IE IT LI LU MC NL PT SE**
Designated Extension States:
**AL LT LV MK RO SI**

(30) Priority: **16.04.1997 JP 99308/97**

(71) Applicant: **MITA INDUSTRIAL CO. LTD.**
**Chuo-ku , Osaka 540 (JP)**

(72) Inventors:
- **Ishihara, Takahiro**
  **Tamatsukuri, Chuo-ku, Osaka 540 (JP)**
- **Horikani, Norio**
  **Tamatsukuri, Chuo-ku, Osaka 540 (JP)**

(74) Representative: **Cresswell, Thomas Anthony**
**J.A. KEMP & CO.**
**14 South Square**
**Gray's Inn**
**London WC1R 5LX (GB)**

## (54) Transparent yellow powder paint

(57) The transparent yellow powder paint of this invention is prepared by dispersing a charge controlling agent and a yellow coloring agent in a binder resin; It is especially characterized in that as the charge controlling agent, C.I. solvent yellow 56 or C.I. solvent yellow 33 is used. This powder paint can form a vivid yellow coated film having a deep color. In addition, color reproducibility in toning can be exactly ensured. Furthermore, when electrostatic coating is carried out by using a frictional charging gun, the occurrence of a lowly charged powder or an inversely charged powder can be effectively suppressed.



Printed by Jouve, 75001 PARIS (FR)

**Description**

BACKGROUND OF THE INVENTION

1. Field of the Invention

This invention relates to a transparent yellow powder paint having good color reproducibility.

2. Description of the Prior Art

Paints have aesthetic effects such as imparting of coloration or luster and greatly contribute to the protection of coated products in respect of humidity resistance, chemical resistance or sterilization.

As the paints, solvent-type or emulsion-type liquid paints using organic solvents or water are general. With recent interests in environmental protection or safety, powder paints which do not require solvents have been attracted.

The coating method using powder paints includes the following types.

(A) A fluidized dipping method which comprises contacting the powder paint with a heated article to be coated to melt the powder paint, and adhering the paint to the coating article.

(B) An electrostatic coating method which comprises charging the powder paint, electrostatically adhering the powder paint to the material to be coated, and heating the powder paint to melt and to form a continuous coated film.

(C) An electrostatic fluidized dipping method obtained by combining the fluidized dipping method with the electrostatic coating method.

However, since the powder paint cannot be simply toned at the site of coating unlike the liquid paint, there is a problem in the applicability of the powder paint.

Toning of the liquid paint can be easily carried out by adding a coloring agent having a suitable color to the liquid color at the site of coating. However, the powder paint is produced by melt-kneading a binder resin and a coloring agent. Toning of the powder paint is carried out by dry-mixing powder paints having different colors. In order to perform toning freely, many powder paints having different colors must be prepared. In addition, to tone colors having subtle differences, many powder paints having slightly different colors should be prepared. In this way, powder paints have low toning characteristics, and to perform toning of powder paints, much time and labor are required, and a markedly large increase in cost may be involved.

Among the above-mentioned methods of coating powder paints, the electrostatic coating method uses a powder spray gun to spray the powder paint to an article to be coated, and to electrostatically adhere the powder paint. The powder spray gun can be classified into a corona charging type (corona charging gun) and a frictional charging type (frictional charging gun) by the difference of a method of charging the powder paint. In the powder paints used to coat by using a frictional charging gun, a charge controlling agent having a polarity matching the charging polarity of the powder paint is compounded so that the frictional charging property is increased, and the charged amount may not be changed according to the changes in the environmental conditions but should be stable.

In the case of a frictional charging gun in which a fluorine resin is used in the inner wall surface of the frictional charging gun for frictionally charging a powder paint, the powder paint is charged positively by the friction of the fluorine resin. Therefore, as the charge controlling agent to be included in the positively chargeable powder paint, a positive charge controlling agent such as a quaternary ammonium salt is used.

However, since powder paints containing the charge controlling agent have a large variation of the charged amount of the individiual powder paints, the distribution of the charged amount becomes broad to tend to be prone to generate a lowly charged powder having an insufficient amount of charging, or an inversely charged powder. Thus, it is clear that because of the lowly charged powder or the inversely charged powder, the coating efficiency on the coated article is likely to be lowered.

Since an ordinary charge controlling agent has a high polarity, compatibility and dispersibility with and in a binder resin constituting a powder paint is insufficient, and the distribution of concentration in the binder resin is likely to become non-uniform.

When the coating of a powder paint is carried out by using a frictional charging gun, the coating efficiency is low and should desirably be improved.

On the other hand, Japanese Laid-Open Patent Publication No. 183916/1996 proposes the use of a powder paint having transparency in order to utilize the luster of the surface of a metallic coated product. It is expected that such a transparent powder paint can be freely toned by three kinds of powder paints having cyan, magenta and yellow, which are three primary colors, or four kinds of powder paints obtained by further adding a black-color transparent powder paint.

Since, in the transparent powder paint disclosed by the above prior art, the holding of the feeling of the metal as a groundwork and the increase of the transparency are considered to be too important, the amount of the coloring agent used is 0.001 to 0.5 part by weight per 100 parts by weight of the resin. Because this amount of the coloring agent is about 1/100 of the content of the coloring agent in an ordinary powder paint, the hue is pale, and there is a problem that a vivid color cannot be formed.

If the content of the coloring agent is simply increased to remedy the above defect, the transparency is lowered and color reproducibility during the toning is lowered.

Furthermore, in the above-mentioned transparent powder paint, the lowering of the coating efficiency at the time of performing the coating by using a frictional charging gun cannot be prevented. To prevent the development of a lowly charged powder or an inversely charged powder which causes the coating efficiency to be lowered, the simplest method is to increase the content of a charge controlling agent in the powder paint.

However, in the above-mentioned transparent powder paint, if the content of the charge controlling agent is increased, the color of the charge controlling agent appears. Even if the charge controlling agent is colorless, since the charge controlling agent has poor compatibility in or poor dispersibility with the binder resin, cloudiness occurs, or color greatly changes.

## SUMMARY OF THE INVENTION

It is an object of this invention to provide a sufficiently transparent yellow powder paint which can color a deep and vivid coloration and when toning is performed, color reproducibility is not lowered.

It is another object of this invention to provide a transparent yellow powder paint free from the development of a lowly charged powder or an inversely charged powder, in which the charged amount of electrostatic coating is high by using a frictional charged gun, the charged amount is not varied by environmental conditions but remains stable, and the distribution of the charged amount is sharp.

According to this invention, there is provided a transparent yellow powder paint prepared by dispersing a charge controlling agent and a yellow coloring agent in a binder resin, wherein the charge controlling agent includes a yellow dyestuff classified as C.I. solvent yellow 56 or C.I. solvent yellow 33 indicated by Color Index. The yellow dyestuff classified as C.I. solvent yellow 56 or C.I. solvent yellow 33 used in this invention has a function as a positive charge controlling agent, and has a color near the color of a yellow powder paint. Accordingly, by using such a yellow dyestuff, the frictional charging characteristics of a powder paint are increased, the occurrence of a lowly charged powder or an inversely charged powder is suppressed effectively, and simultaneously, the color of a powder paint is not adversely affected, the lowering of color reproductivity during toning is effectively prevented, and it is possible to obtain a coated film having a deep color and a vivid color.

It is desirable to use, as the yellow coloring agent, at least one type selected from the group consisting of acetoacetic acid allylide-type monoazo pigments, acetoacetic acid allylide-type disazo pigments, benzimidazoline pigment, isoindoline pigment and fused azo pigments in this invention. These yellow pigments have a function of positive charge controlling agents not as much as the yellow dyestuffs mentioned above. Hence, by using these yellow pigments, the occurrence of a lowly charged powder or an inversely charged powder is more effectively prevented. The frictional charged amount of the transparent powder paint which contains these yellow pigments is high and the powder paint is extremely stable against environmental changes, and in addition, the distribution of the charge amount becomes sharp. As a result, when coating is carried out by using a frictional charging gun, it is possible to ensure high efficiency of coating.

In this invention, polyester resins should preferably be used as the binder resin. The polyester resins have good compatibility with and dispersibility in the above-mentioned yellow dyestuffs, and the frictional chargeability of the transparent yellow powder paints can be effectively increased. Especially yellow dyestuffs belonging to C.I. solvent yellow 33 have a slightly inferior function as the positive charge controlling agents in comparison with C.I. solvent yellow 56, but by combining with the polyester resins, the same effect as C.I. solvent yellow 56 can be exhibited.

In the present invention, the quaternary ammonium salt may be used in combination with the yellow dyestuffs mentioned above. The quaternary ammonium salt is a colorless or pale positive charge controlling agent. If this quaternary ammonium salt is compounded in a large amount, the powder paint becomes cloudy, and its transparency is hampered. However, in the presence of the above-mentioned yellow dyestuff, by compounding a small amount of the quaternary ammonium salt, the positive charge characteristics of the transparent powder paint can be markedly increased.

DETAILED DESCRIPTION OF THE INVENTION

BINDER RESINS

As the binder resins in the transparent yellow powder paints of this invention, various resins capable of forming a continuous coated film by heating an article to be coated during coating or after coating are selected from conventionally known various resins.

Examples of such binder resins include styrene resins (homopolymers or copolymers containing styrene or styrene substituents) such as polystyrene, chloropolystyrene, poly-α-methylstyrene, styrene-chlorostyrene copolymer, styrene-propylene copolymer, styrene-butadiene copolymer, styrene-vinyl chloride copolymer, styrene-vinyl acetate copolymer, styrenemaleic acid copolymer, styrene-acrylate copolymers (such as styrene-methyl acrylate copolymer, styrene-ethyl acrylate copolymer, styrene-butyl acrylate copolymer, styrene-octyl acrylate copolymer or styrene-phenyl acrylate copolymer), styrene-methacrylate copolymers (such as styrene-methyl methacrylate copolymer, styrene-ethyl methacrylate copolymer, styrene-butyl methacrylate copolymer or styrene-phenyl methacrylate copolymer), styrene-methyl α-chloroacrylate and styreneacrylonitrile-acrylate; homopolymers or copolymers composed mainly of (meth)acrylic acid or esters thereof such as acrylic acid, methyl acrylate, ethyl acrylate, butyl acrylate, octyl acrylate, phenyl acrylate, methacrylic acid, methyl methacrylate, ethyl methacrylate, butyl methacrylate, phenyl methacrylate and ethyl α-chloroacrylate; and polyvinyl chloride, low molecular weight polyethylene, low molecular weight polypropylene, ethylene-ethyl acrylate copolymer, polyvinyl butyral, ethylene-vinyl acetate copolymer, polyester resins, epoxy resins and sillicone resins. The foregoing polymers may be used singly or as a mixture of at least two members.

Among the above binder resins, styrene resins, acrylic resins and polyester resins are preferred. Especially, the polyester resins are preferred. The most preferred polyester resins are obtained by polycondensing;

(i) a diol component represented by the general formula (1),

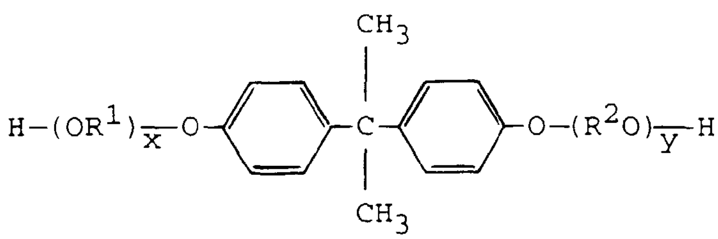

(1)

wherein each of $R^1$ and $R^2$ represents a lower alkylene group having 1 to 6, and x and y represent 0 or an integer of at least 1, and x + y represent an integer of 1 to 7,

(ii) a dicarboxylic acid, its acid anhydride or a lower alkyl (having 6 carbon atoms or less) ester thereof, and

(iii) a polyvalent carboxylic acid having at least three valences, its acid anhydride, or a lower alkyl (having 6 carbon atoms or less) ester thereof, or a polyhydric alcohol having at least three valences,

and the polyester resin having a ratio between the hydroxyl value (OHV) and the acid value (AV) [OHV/AV] of at least 1.2.

These polyester resins have excellent transparency, but also have excellent compatibility with or dispersibility in the below-mentioned charge controlling agents or the yellow coloring agents. Hence, by using these polyester resins, powder paints having sufficient transparency and vivid yellow color can be prepared. In addition, the resulting powder paints can be uniformly charged positively by frictional charging.

Ratio (OHV/AV) between the hydroxyl value (OHV) and the acid value (AV) of the polyester resin should be at least 1.2, preferably 1.2 to 50, most preferably 2 to 40. If this value is smaller than 1.2, the acid groups at the terminal of molecules become great. Since the polyester resin cannot be completely melted at a certain temperature, the minimum melting temperature becomes high. This leads to a problem that the flowability of the powder paint is lowered, and a coated film having a uniform thickness is difficult to obtain.

The acid value (AV) may be about 5 to 60 KOH mg/g. The hydroxyl value (OHV) is preferably about 10 to 1000 KOH mg/g. The acid value (AV) and the hydroxyl value (OHV) were sought by the method described in JIS K 0211.

In the above polyester resin, examples of lower alkylene groups represented by $R^1$ and $R^2$ in the diol component shown by general formula (1) include methylene, ethylene, trimethylene, propylene, tetramethylene, ethylethylene, pentamethylene and hexamethylene having 1 to 6 carbon atoms. Further, x + y in the general formula (1) indicates an integer of 1 to 7, especially an integer of 3 to 5. If this value exceeds 7, the molecular weight of the diol component

becomes too large, and the transparency of the resulting coated film may be lowered.

Specific examples of the diol component represented by the general formula (1) include polyoxypropylene(2.2)-2,2-bis(4-hydroxyphenyl)propane, polyoxypropylene(3.3)-2,2-bis(4-hydroxyphenyl)propane, polyoxyethylene-(2.0)-2,2-bis(4-hydroxyphenyl)propane, polyoxypropylene (2)-polyoxyethylene(2)-2,2 -bis(4-hydroxyphenyl)propane, and polyoxypropylene(6.0)-2,2-bis(4-hydroxyphenyl)propane.

Unless the excellent transparency and dispersibility of the polyester resins are impaired, diols other than the diol component of the general formula (1) may be used. Examples of such other diols include hydroquinone, ethylene glycol, diethylene glycol, triethylene glycol, 1,2-propylene glycol, 1,3-propylene glycol, 1,4-butanediol, neopentyl glycol, 1,4-butenediol, 1,5-pentanediol, 1,6-hexanediol, bisphenol A and hydrogenated bisphenol A. The amount of these other diol components may preferably be adjusted to not larger than 10 mole% based on the total alcohol component.

Examples of the dicarboxylic acid (ii) to be polycondensed with the diol component (i) include oxalic acid, malonic acid, succinic acid, itaconic acid, glutaconic acid, adipic acid, maleic acid, fumaric acid, citraconic acid, mesaconic acid, azelaic acid, sebacic acid, cyclohexanedicarboxylic acid, phthalic acid, isophthalic acid and terephthalic acid. These dicarboxylic acids may be acid anhydrides or esters with lower alkyl groups. Examples of the lower alkyl groups include methyl, ethyl, n-propyl, isopropyl, n-butyl, isobutyl, sec-butyl, t-butyl, n-pentyl and n-hexyl having 1 to 6 carbon atoms.

Examples of the polyvalent carboxylic acids having at least three valences, acid anhydrides thereof, or lower alkyl esters thereof to be polycondensed with the components (i) and (ii) include trimellitic acid, 2,5,7-naphthalenetricarboxylic acid, 1,2,4-naphthalenetricarboxylic acid, 1,2,4-butanetricarboxylic acid, 1,3-dicarboxy-2-methyl-2-methoxycarbonylpropane, tetra(methoxycarbonyl)methane and 1,2,7,8-octanetetracarboxylic acid. Examples of the polyhydric alcohols having at least three valences as the component (iii) include glycerin, 2-methyl-1,2,3-propanetriol, 1,2,4-butanetriol, 2-methyl-1,2,4-butanetriol, 1,2,5-pentatriol, pentaerythritol, dipentaerythritol, tripentaerythritol, hexitol, sorbitol, 1,4-sorbitan and 1,2,4-benzenetriol.

The carboxylic acid having at least trivalences or the alcohol as component (iii) is used to adjust the acid value or the hydroxyl value of the polyester resin to the above-mentioned ranges and to make the polyester resin three-dimensional network structure and is used in an amount of about 5 to 60 mole%.

The polycondensation of the components (i) to (iii) is carried out at a temperature of 180 to 250°C, for example, in an inert gas atmosphere. Of course, to promote this reaction, an esterification catalyst such as zinc oxide, stannous oxide, di-n-butyl tin oxide or dibutyl tin dilaurate may be used and the reaction is performed under reduced pressure.

The above-mentioned polyester resin may be blended with another resin. In this case, the other resin may be used in an amount of not larger than 30% by weight, especially 1 to 30% by weight.

In the present invention, the above-mentioned binder resin may have a glass transition temperature of 40 to 80°C. If the glass transition temperature of the binder resin is lower than the above range, the resulting powder paint has poor storage stability. If the glass transition temperature of the binder resin is higher than the above range, the coated film formability will be adversely affected.

<u>Charge controlling agents</u>

(1) Yellow dyestuffs

In the present invention, yellow dyestuffs belonging to C.I. solvent yellow 56 and C.I. solvent yellow 33 may be used as the charge controlling agents. Of course, these yellow dyestuffs may be used as a mixture.

The amount of the above dyestuffs to be compounded is preferably 0.5 to 10 parts by weight, more preferably 1 to 5 parts by weight, per 100 parts by weight of the binder resin. If the compounded amount of the above yellow dyestuff is less than the above range, the transparency of the coated film is lowered, or the distribution of the charged amount of the powder paint is likely to become broad.

(2) Quaternary ammonium salt

In the present invention, the quaternary ammonium salt may be used in combination with the above yellow dyestuff. By using the above quaternary ammonium salt, the function of the yellow dyestuff as the positive charge controlling agent can be more increased. The amount used of the quaternary ammonium salt should be such that the weight ratio of the quaternary ammonium salt/yellow dyestuff becomes 1/5 to 5/1, especially 1/3 to 3/1, most preferably 1/2 to 2/1. Furthermore, the total amount of the quaternary ammonium salt and the yellow dyestuff should be preferably 10 parts by weight or less, especially 5 parts by weight or less, more preferably 3 parts by weight or less, most preferably 0.5 to 2.5 parts by weight, per 100 parts by weight of the binder resin.

If the amount of the quaternary ammonium salt is less than the above range, the effect of increasing the frictional charging property of the transparent powder paint cannot be fully exhibited. If the amount of the quaternary ammonium

salt is larger than the above range, the transparency of the powder paint is lowered, or the color of the powder paint is likely to change.

As the quaternary ammonium salt, preferred examples of the quaternary ammonium salts of the general formula (2)

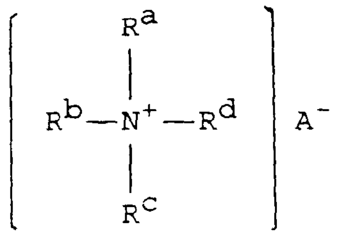

(2)

wherein $R^a$, $R^b$, $R^c$ and $R^d$ represent a lower alkyl group having 1 to 6 carbon atoms, a long-chain alkyl or alkenyl group having at least 7 carbon atoms, or a benzyl group, among them, at least one group represents the long-chain alkyl or alkenyl group, and two of these groups represent the lower alkyl group or the benzyl group, and $A^-$ represents an anion.

In the general formula (2) above, the long-chain alkyl group corresponding to $R^a$ to $R^d$ includes an octyl group, a decyl group, a dodecyl group, a tetradecyl group, a hexadecyl group, an octadecyl group, an eicosyl group, a docosyl group and a stearyl group. The long-chain alkenyl group includes a group having 1 or at least 2 double bond between carbon atoms in the molecule of the above long-chain alkyl group, such as an oleyl group, a linoleyl group, or a hexadecenyl group.

Examples of the anion represented by $A^-$ are the anion derived from inorganic acids containing a molybdenum atom or a tungsten atom such as molybdic acid, phosphomolybric acid, silico-molybdic acid, chromium.molybdic acid, bromo.molybdic acid, tungstic acid, phosphotungstic acid, silico-tungstic acid, chromium.tungstic acid, bromo.tungstic acid, phosphotungsten.molybdic acid and silicotungsten.molybdic acid; a chlorine ion; a bromine ion; an iodine ion; a nitric acid ion; a sulfuric acid ion; a perchloric acid ion; a benzoic acid ion; a tetraphenyl boron ion; a hexafluorine ion; and a naphtholsulfonic acid ion.

Most preferred species among the quaternary ammonium salt represented by the general formula (2) are
$(C_{16}H_{33})_2N^+(CH_3)_2.1/4Mo_8O_{26}^{4-}$,
$(C_{16}H_{33})_2N^+(CH_3)_2.1/6Mo_7O_{24}^{6-}$ and
$(C_{16}H_{33})_2N^+(CH_3)_2.1/2WO_4^{2-}$. These compounds may be used singly or as a mixture of at least two compounds.

<u>Yellow coloring agents</u>

In the present invention, yellow coloring agents other than the above-mentioned yellow dyestuffs, such as acetoacetic acid allylide-type monoazo pigments, acetoacetic acid allylide-type disazo pigments, benzimidazoline pigments, isoindoline pigments and fused azo pigments, are preferably used. Since these yellow pigments by themselves have a function of controlling a positive charge, the conjoint use of these yellow pigments and the yellow dyestuffs more increases the frictional chargeabillity of the transparent powder paints, and it is possible to increase the frictional charged amount and to plan the sharpness of the distribution of the charged amount. Hence, the coating performance by using a frictional charging gun can be increased more.

Among the yellow pigments illustrated above, acetoacetic acid allylide monoazo pigments represented by the general formula (3)

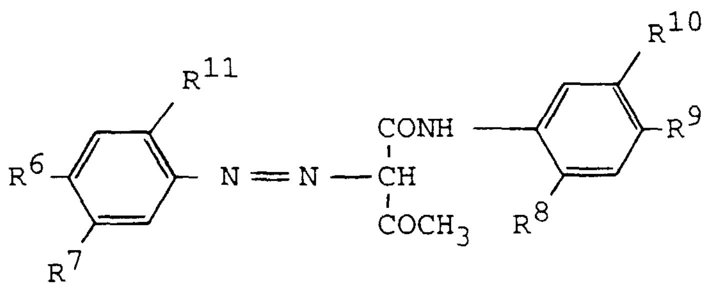

(3)

wherein $R^6$ represents a halogen atom, an alkyl group, an alkoxy group, a nitro group, an aryl-substituted sulfamoyl group or a sulfo group substituted by Ca, Sa, Mn or Sr, each of $R^7$, $R^8$, $R^9$ and $R^{10}$ represents a hydrogen atom, a halogen atom, an alkyl group or an alkoxy group,
and $R^{11}$ represents an alkyl group, an alkoxy group or a nitro group.

Examples include C.I. Pigment Yellow 1, C.I. Pigment Yellow 3, C.I. Pigment Yellow 65, C.I. Pigment Yellow 73, C.I. Pigment Yellow 74, C.I. Pigment Yellow 97, C.I. Yellow 98, C.I. Pigment Yellow 130, C.T. Pigment Yellow 133 and C.I. Pigment Yellow 169.

Examples of the acetoacetic acid allylide disazo pigments are those of the general formula (4)

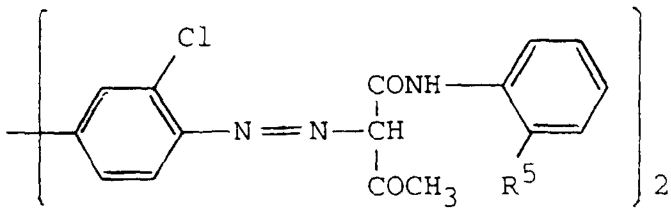

(4)

wherein $R^5$ represents a hydrogen atom, an alkyl group or an alkoxy group.

Examples of the alkyl group or the alkoxy group corresponding to $R^5$ in the general formula (4) may include those alkyl and alkoxy groups having 1 to 6 carbon atoms, such as methyl, ethyl, n-propyl, isopropyl, n-butyl, isobutyl, sec-butyl, t-butyl, n-pentyl, n-hexyl, methoxy, ethoxy, n-propoxy, isopropoxy, n-butoxy, t-butoxy, n-pentyloxy and n-hexyloxy. Specific examples of the acetoacetic acid allylide disazo pigments include C.I. Pigment Yellow 17 ($R^5$ is a methoxy group), C.I. Pigment Yellow 12 ($R^5$ is a hydrogen atom), and C.I. Pigment Yellow 14 ($R^5$ is a methyl group).

An example of the benzimidazolone pigment is C.I. Pigment Yellow 154 represented by formula (5).

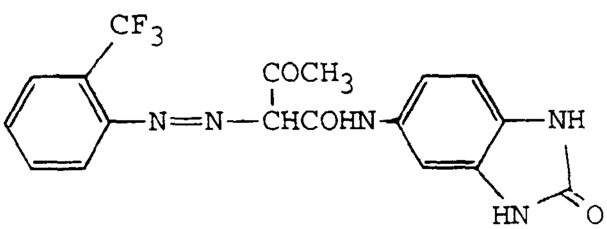

(5)

An example of the isoindoline pigment is C.I Pigment Yellow 109 represented by formula (6).

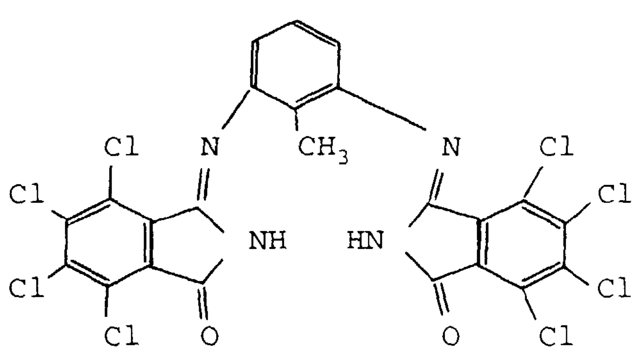

(6)

An example of the fused azo pigment is C.I. Pigment Yellow 93 represented by the general formula (7).

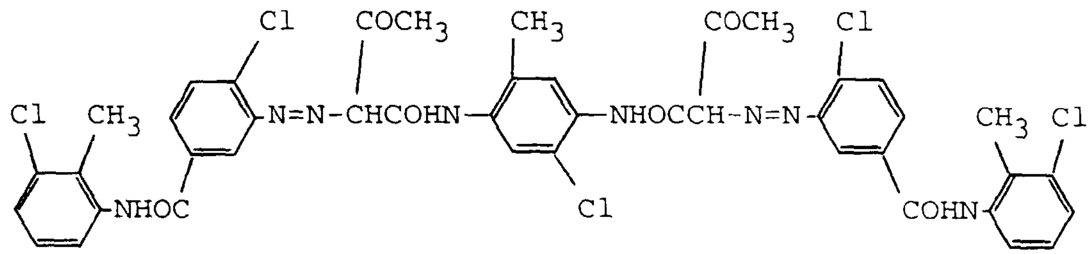

(7)

The most preferably used yellow coloring agents used in this invention include the benzimidazolon pigment, the isoindoline pigment and the fused azo pigment.

The above-mentioned coloring agents may be used singly or as a mixture of at least two types. Usually, they may be used in an amount of 1 to 30 parts by weight, preferably l to 20 parts by weight, more preferably 1 to 15 parts by weight, most preferably 2 to 10 parts by weight, per 100 parts by weight of the binder resin.

In the present invention, when a combination of the yellow dyestuff and the quaternary ammonium salt is used as the above-mentioned charge controlling agent, since the function of controlling a positive charge is reinforced, it is possible to use a yellow coloring agent not having the function of controlling the charge. Examples of such yellow coloring agents include inorganic pigments such as yellow iron oxide, ochre, chrome yellow, cadmium yellow and antimony yellow, organic pigments such as C.I. Pigment Yellow 16, C.I. Pigment Yellow 138 and C.I. Pigment Yellow 115, and dyestuffs such as C.I. sovent yellow 16, C.I. solvent yellow 60, C.I. solvent yellow 61, C.I. solvent yellow 162, C.I. acid yellow 1 and C.I. acid yellow 23.

-Other compounding agents-

In the transparent powder paints of this invention, in addition to the above-mentioned charge controlling agents or yellow coloring agents, it is possible to disperse and compound curing agents, curing promoters, transparent electric conductive fine powders, smoothing agents and defoamers in ranges which do not impair the transparency of the binder resins.

The curing agents and curing promoters are used to cure the binder resin in the powder paint and harden the coated film when the powder paint applied to the surface of an article to be coated is heated and melted to form a coated film. Examples of such curing agents are blocked isocyanate, dodecanedioic acid, water-dispersible epoxy resins, water-dispersible amino resins, water-dispersible aziridine resin and polyvalent carboxylic acids. The compounding amounts of these curing agents are properly established according to the equivalent of the reactive group of the polyester resin. A typical example of the curing promoter is dioctyltin maleate. This curing promoter is usually used in a proportion of 0.1 to 2 parts by weight per 100 parts by weight of the binder resin.

When the transparent yellow powder paint of this invention is toned by using cyan, magenta and black transparent powder paints, a transparent electric conductive fine powder may be included in order to match the charging characteristic of a black transparent powder paint using electroconductive carbon black. Such a transparent electroconductive fine powder may preferably have an aspect ratio (long axis length/thickness) of at least 30 and have a thickness of 0.1 μm or below.

The compounded amount of the transparent electroconductive fine powder may be properly established to match the charging characteristics of the transparent powder paint.

The smoothing agent is compounded to increase flowability at the time of heating the transparent powder paint to melt it and to smoothen the coated film. As the smoothening agent, polybutyl acrylate is known. Generally, "Acronal 4F", a trademark of BASF, "YF-3919", a trademark of Toshiba Silicone, and "Modaflow 2000", a trademark of Monsanto, are used. The compounded amount of the smoothening agent is 0.1 to 2 parts by weight, preferably 0.5 to 1 part by weight.

The defoamers are compounded to prevent the occurrence of bubbles at the time of forming a coated film by heat-melting the transparent powder paint. For example, benzoin is used. The compounded amount of the deformer is 0.1 to 2 parts by weight per 100 parts by weight.

-Production of transparent yellow powder paint-

The transparent yellow powder paint of this invention can be produced by pre-kneading the above components

by a dry blender, a Henschel mixer, a ball mill, then uniformly melting and kneading the mixture by using a kneading machine such as a jet mill, a Bumbury's mixer, a roll or a monoaxial or biaxial extruder, cooling the resulting kneaded product, pulverizing the kneaded product, as required classifying the resulting kneaded product. The above yellow powder can also be produced by a conventional known method such as a polymerization method, a microcapsular polymerization method, or a spray drying method.

The particle diameter of the transparent yellow powder paint may be the same as the conventional powder paint. Especially in view of the uniformity of the color at the time of mixing at least two colors, the particle diameter of the transparent yellow powder paint should preferably as small as possible. Especially, the average particle diameter should be preferably 30 μm or less.

When the ease of forming chargeability, the ease of forming a coated film and the difficulty of aggregation are considered, the average particle diameter of the transparent yellow powder paint should be preferably at least 1 μm.

When the balance among various characteristics is considered, the average particle diameter of the transparent yellow powder paint should preferably be 5 to 20 μm among the above range.

Various external additives may be added to the transparent yellow powder paint of this invention to increase the flowabillity or charging characteristics.

Examples of the above external additives may be conventionally known various external additives having a particle diameter of 1.0 μm or less such as fine powders of metal oxides, for example aluminum oxide, silicon dioxide, titanium oxide, and zinc oxide, or fluorine resin fine particles. Especially preferably used external additives are silica-type surface treating agents containing hydrophotic or hydrophilic silica fine powders, such as ultrafine particles of anhydrous silica or colloidal sillica.

The amounts added of the external additives are not particularly limited, and may be the same as conventionally used. Specifically, it is preferred to use the external additives in a total amount of about 0.1 to 3.0 parts by weight per 100 parts by weight of the transparent yellow powder paint. Sometimes, the amount of the external additive may fall outside the above range.

The resulting transparent yellow powder paint of this invention are most preferably used to form a coated film by an electrostatic coating method with a charging gun. It may be applied to form a coated film by an electrostatic coating method with a corona charging gun, or by an electrostatic fluidized dipping method. Any of these methods can form a coated film which is uniform and has a vivid color.

## Examples

Referential Example [Preparation of a polyester resin]

A flask having a capacity of 2 liters was charged with 840 g of polyoxypropylene (2.2)-2,2-bis(4-hydroxyphenyl) propane [the diol component of the general formula (1) in which $R^1$ and $R^2$ are trimethylene, and x and y are respectively 2], 195 g of polyoxyethylene-(2.0)-2,2-bis(4-hydroxyphenyl)propane [the diol component of the general formula (1), $R^1$ and $R^2$ are ethylene, and x is 2 and y is 0], 29 g of terephthalic acid, 2 g of di-n-butyltinoxide (stabilizer) and 1.5 g of hydroquinone, and with stirring at 200°C, the above components were copolycondensed. The reaction was terminated when the softening point of the copolymer reached 122°C in accordance of ASTM E 28-51T.

The resulting polyester resin was a pale yellow solid. By DSC (differential calorimeter), the glass transition temperature of the polyester resin was 66°C. The acid value (AV) is 14 KOH mg/g, the hydroxyl value (OHV) is 36 KOH mg/g, and OHV/AV is 2.57.

(Production of transparent yellow powder paint)

Example 1

The components mentioned below were pre-mixed by using a Henschel mixer, and melted and kneaded by using an extruder kneading machine. The resuting kneaded product was cooled and pulverized.

| (Components) | (Parts by weight) |
|---|---|
| *Binder resin | |
| the polyester resin obtained in Referential Example | 85 |
| *Charge controlling agent | |
| C.I. solvent yellow 56 | 1 |

(continued)

| (Components) | (Parts by weight) |
|---|---|
| *Coloring agent | |
| C.I. Pigment Yellow 97 | 4 |
| acetoacetic acid allylide | |
| monoazo pigment | |
| *Curing agent | |
| Isocyanate | 15 |
| *Smoothing agent | |
| Acronal 4F | 1 |

The pulverized product was classified by using a 150 mesh sieve to produce a positively charged yellow transparent powder paint having an average particle diameter of 12 μm.

Example 2

Example 1 was repeated in the same way as above except that instead of C.I. solvent yellow 56 as a charge controlling agent, 1 part by weight of a yellow dyestuff classified as C.I. solvent yellow 33 to give a positively chargeable yellow transparent powder paint having an average diameter of 12 μm.

Example 3

Example 2 was repeated except that instead of C.I. Pigment Yellow 97 as a coloring agent, 4 parts by weight of a yellow pigment classified as C.I. Pigment Yellow 12 (acetoacetic acid allylide disazo pigment) was used to produce a positive chargeable yellow transparent powder paint having an average particle diameter 12 μm.

Comparative Example 1

Example 1 was repeated except that instead of C.I. solvent yellow 56 as a charge controlling agent, 1 part by weight of a yellow dyestuff classified as C.I. solvent yellow 60 to produce a positively chargeable yellow transparent powder paint having an average particle diameter of 12 μm.

With respect to the transparent yellow powder paints prepared in the Examples and the Comparative Example, the following tests were carried out and the characteristics were evaluated.

(Evaluation of the dispersibility)

A transparent yellow powder paint prepared in the Examples and the Comparative Example was interposed between two glass plates, and melted while compressing to prepare a sample (thickness of the coated film was 1 μm). The number and the size of coagulated masses of each sample were observed with a microscope. By the following standards, the dispersibility of each component in the binder resin was evaluated.

○: the size of the coagulated masses is small and the number of the coagulated masses is few. Good dispersibility.

×: the size of the coagulated masses is large or the number of the coagulated masses is many. Poor dispersibility.

(Measurement of spectral transmittance)

In the sample used in evaluating the dispersibility, the spectral transmittance of light having a wavelength of 400 nm and 550 nm was measured by using a spectrophotometer.

(Evaluation of transparency)

The spectrum of the sample was measured by using a spectrophotometer, and when the maximum transmittance of a light having a wavelength region of 400 to 500 nm is prescribed as 2%, the evaluation was made on the following standards.

○ (good transparency): the maximum transmittance of a wavelength region of light at 550 to 700 nm is at least 50%.

× (poor transparency) : the above conditions are not satisfied.

(Toning test)

The transparent yellow powder paint used in each Example and each Comparative Example was dry-mixed with the transparent cyan powder paint containing the same binder resin as used in each Example and each Comparative Example in a weight ratio of 20 : 80 (yellow:cyan). The dry-mixed powder paint was coated on the surface of an iron plate by an electrostatic coating method using a frictional charging gun in which a charging member comprising a fluorine resin is arranged on the surface of its inside wall and a coated film was formed by baking. By the following standards, the toning property of the transparent yellow powder paint was evaluated

○: the color of the coated film is uniform. Good toning property.

×: the color of the coated film becomes dark, and yellow spots are observed in the coated film. Poor toning property.

(Measurement of a charged amount)

Five parts by weight of the transparent yellow powder paint obtained the examples or the comparative example and 95 parts by weight of ferrite particles having an average particle diameter of 100 μm whose surface was coated with the same fluorine resin as the surface of the inner wall of the frictional charging gun were put into a hermetically closed container. The hermetically closed container was rotated 10 times with a ball mill to charge it, and the charged amount (μC/g) of the powder paint by a blow off method.

(Measurement of coating efficiency)

The transparent yellow powder paint of each Example and each Comparative Example was coated actually on the surface of an iron plate by an electrostatic coating method by using a frictional charging gun in which on the surface of an inner wall a fluorine resin was arranged as a charging member.

From the amount Pa (g) of the powder paint charged from the frictional charging gun and the amount Pb (g) of the powder paint coated on the iron plate, the coating efficiency (%) of the powder paint was sought by the following formula;

$$\text{Coating efficiency (\%)}=(Pb/Pa) \times 100.$$

(Evaluation of the characteristics of the recovered powder paint)

In the above measurement of the coating efficiency, the powder paint recovered without being coated on the iron plate was collected, and was coated on the surface of the iron plate by the same electrostatic coating method as above. The state of coating was observed by visual analysis, and the characteristics of the recovered powder paint were evaluated by the following standards.

○: Not abnormal in the coated state. The powder had good characteristics.

Δ: Poor coating. The powder had slightly poor characteristics.

×: Hardly coated. The powder had poor characteristics.

Such evaluation is to examine whether the above-mentioned lowly charged powder or the inversely charged powder existed or not. If the result was ○, the recovered powder paint hardly contained a lowly charged powder or an inversely charged powder. But if the result was ×, the recovered powder paint contained large amounts of such lowly charged powder and such inversely charged powder.

The above results are shown in Table 1.

Table 1

| | Example 1 | Example 2 | Example 3 | Comp.Ex.1 |
|---|---|---|---|---|
| Binder resin | Polyester | Polyester | Polyester | Polyester |
| Charge controlling agent | C.I.Sol. Yellow 56 | C.I.Sol. Yellow 33 | C.I.Sol. Yellow 33 | C.I.Sol. Yellow 60 |
| Coloring agent | C.I.Pig. Yellow 97 | C.I.Pig. Yellow 97 | C.I.Pig. Yellow 12 | C.I.Pig. Yellow 97 |
| Dispersibility | ○ | ○ | ○ | ○ |
| Spectral transmittance 400 nm / 500 nm | 1.5 % / 71 % | 1.9 % / 65 % | 1.6 % / 68 % | 1.8 % / 30 % |
| Transparency | ○ | ○ | ○ | × |
| Toning property | ○ | ○ | ○ | × There are spots. |
| Charged amount (μC/g) | 19 | 21 | 20 | 8 |
| Coating efficiency (%) | 73 | 78 | 72 | 50 or below |
| Characteristi s of the recovered powder paint | ○ | ○ | ○ | × |

Table 1 shows that in a powder paint in which a polyester resin is used as the binder resin, when a yellow dyestuff classified as C.I. solvent yellow 33 and/or C.I. solvent yellow 56 as a charge controlling agent and an acetoacetic acid allylide-type yellow pigment as a yellow coloring agent are conjointly used, the color is deep and a vivid color is obtained, there is a sufficient transparency and color reproducibility is not lowered at the time of performing toning, and especially when electrostatic coating is carried out by using a frictional charging gun, chargeability was excellent and a transparent yellow powder paint free from the occurrence of a lowly charged powder or an inversely charged powder can be obtained.

Example 4

The following components were pre-mixed by using a Henschel mixer, melted and kneaded by using an extruding kneader, and the kneaded mixture was cooled and pulverized.

| (Components) | (Parts by weight) |
|---|---|
| *Binder resin | |
| Acrylic resin | 77 |
| ("Almatex PD7210", a trademark of Mitsui Toatsu Chemical, Inc.) | |
| *Charge controlling agent | |
| C.I. solvent yellow 56 | 2 |
| *Coloring agent | |
| C.I. Pigment Yellow 98 | 4 |
| *Curing agent | |
| Dodecanedioic acid | 13 |
| *Smoothing agent | |
| Acronal 4F | 1 |

Then, the above pulverized product was classified by a 150 mesh sieve to prepare a positively charged yellow transparent powder paint having an average particle diameter of 12 µm.

Comparative Example 2

Example 4 was repeated except that instead of C.I. solvent yellow 56 as a charge controlling agent, 2 parts by weight of a yellow dyestuff classified as C.I. solvent yellow 61 was used to prepare a positively charged yellow-type transparent powder paint having an average particle diameter of 12 µm.

Comparative Example 3

Example 4 was repeated except that instead of C.I. solvent yellow 56 as a charge controlling agent, 2 parts by weight of a yellow dyestuff classified as C.I. solvent yellow 33 was used, and instead of C.I. Pigment Yellow 98 as a coloring agent, 4 parts by weight of a yellow pigment classified as C.I. Pigment Yellow 17 was used to prepare a positively charged yellow-type transparent powder paint having an average particle diameter of 12 µm.

With respect to the transparent yellow powder paints of the Example and the Comparative Examples given above, the tests were conducted, and the characteristics were evaluated. The results are shown in Table 2.

Table 2

| | Example 4 | Comp.Ex.2 | Comp.Ex.3 |
|---|---|---|---|
| Binder resin | Acrylic resin | Acrylic resin | Acrylic resin |
| Charge controlling agent | C.I.Sol. Yellow 56 | C.I.Sol. Yellow 61 | C.I.Sol. Yellow 33 |
| Coloring agent | C.I.Pig. Yellow 98 | C.I.Pig. Yellow 98 | C.I.Pig. Yellow 17 |
| Dispersibility | ○ | × | × |
| Spectral transmittance | | | |
| 400 nm | 1.8 % | 1.8 % | 1.6 % |
| 500 nm | 62 % | 35 % | 42 % |
| Transparency | ○ | × | × |
| Toning property | ○ | × dark | × dark |

Table 2 (continued)

| | Example 4 | Comp.Ex.2 | Comp.Ex.3 |
|---|---|---|---|
| Charged amount (μC/g) | 15 | 12 | 13 |
| Coating efficiency (%) | 58 | 50 | 59 |
| Characteristics of the recovered powder paint | ○ | Δ | × |

Table 2 shows that in a powder paint in which an acrylic resin was used as the binder resin, when a yellow dyestuff classified as C.I. solvent yellow 56 as a charge controlling agent and a yellow pigment of the acetoacetic acid allylide-type as a coloring agent are conjointly used, the color is deep and a vivid color can be obtained, at the time of performing toning, color reproducibility is not lowered and sufficient transparency exists, and especially when electrostatic coating is carried out by using a frictional charging gun, chargeability is excellent, and it has been found that a transparent yellow powder paint free from the occurrence of a lowly charged powder or an inversely charged powder can be obtained.

Example 5

The following components were pre-mixed, melted and kneaded by using an extruding kneading machine, and the resulting kneaded product was cooled and pulverized.

| (Components) | (Parts by weight) |
|---|---|
| *Binder resin | |
| Polyester resin obtained by Referential Example | 85 |
| *Charge controlling agent | |
| C.I. solvent yellow 33 Quaternary ammonium salt having the formula expressed by the following formula | 1 |
| $(C_{16}H_{33})_2N^+ (CH_3)_2.1/4\ Mo_8O_{26}^{4-}$ | 1 |
| *Coloring agent | |
| C.I. Pigment Yellow 17 | 4 |
| *Curing agent | |
| Isocyanate | 15 |
| *Smoothing agent | |
| Acronal 4F | 1 |

Then, the pulverized product above was classified by a 150 mesh sieve to prepare a positively charged yellow-type transparent powder paint having an average particle diameter of 12 μm.

Example 6

Example 5 was repeated except that instead of C.I. solvent yellow 33 as a charge controlling agent, 1 part by weight of a yellow dyestuff classified as C.I. solvent yellow 56 was used to prepare a positively charged yellow-type transparent powder paint having an average particle diameter of 12 μm.

Comparative Example 4

Example 5 was repeated except that C.I. solvent yellow 33 as a charge controlling agent was not compounded to prepare a positively charged yellow-type transparent powder paint having an average particle diameter of 12 μm.

With respect to the transparent yellow powder paints of the above Examples and the Comparative Examples, the following tests were carried out, and the characteristics of these paints were evaluated. The results are shown in Table 3.

Table 3

| | Example 5 | Example 6 | Comp.Ex.4 |
|---|---|---|---|
| Binder resin | Polyester | Polyester | Polyester |
| Charge controlling agent | C.I.Sol. Yellow 33 *1 | C.I.Sol. Yellow 56 *1 | -- *1 |
| Coloring agent | C.I.Pig. Yellow 17 | C.I.Pig. Yellow 17 | C.I.Pig. Yellow 17 |
| Dispersibility | ○ | ○ | ○ |
| Spectral transmittance | | | |
| 400 nm | 1.6 % | 1.8 % | 1.6 % |
| 500 nm | 69 % | 72 % | 71 % |
| Transparency | ○ | ○ | ○ |
| Toning property | ○ | ○ | ○ |
| Charged amount (μC/g) | 26 | 24 | 17 |
| Coating efficiency (%) | 86 | 85 | 47 |
| Characteristics of the recovered powder paint | ○ | ○ | × |

*1: Quaternary ammonium salt

Examples 7 to 9

Example 5 was repeated except that 4 parts by weight of C.I. Pigment Yellow 109 represented by the formula (6), C.I. Pigment Yellow 93 represented by the formula (7) or C.I. Pigment Yellow 154 represented by the formula (5) as a coloring agent was used to prepare a positively charged yellow-type transparent powder paint having an average particle diameter of 12 μm. The results of the evaluated characteristics of the powder paints are shown in Table 4.

Table 4

| | Example 8 | Example 9 | Example 10 |
|---|---|---|---|
| Binder resin | Polyester | Polyester | Polyester |
| Charge controlling agent | Yellow 33 *1 | Yellow 33 *1 | Yellow 56 *1 |
| Coloring agent | C.I.Pig. Yellow109 | C.I.Pig. Yellow93 | C.I.Pig. Yellow154 |
| Dispersibility | ○ | ○ | ○ |
| Spectral transmittance | | | |
| 400 nm | 1.9 % | 1.6 % | 1.6 % |
| 500 nm | 67 % | 72 % | 70 % |
| Transparency | ○ | ○ | ○ |
| Toning property | ○ | ○ | ○ |

*1: Quaternary ammonium salt

Table 4 (continued)

| | Example 8 | Example 9 | Example 10 |
|---|---|---|---|
| Charged amount (μC/g) | 22 | 22 | 21 |
| Coating efficiency (%) | 80 | 80 | 82 |
| Characteristics of the recovered powder paint | ○ | ○ | ○ |

The results given in Tables 3 and 4 show that the transparent yellow powder paint obtained by conjointly using the quaternary ammonium salt and C.I. solvent yellow 33 or 56 as a charge controlling agent gives a vivid yellow coated film having a deep color. Furthermore, this powder paint has excellent chargeability when electrostatic coating is carried out by using a frictional charging gun, and the occurrence of a lowly charged powder or an inversely charged powder is effectively suppressed.

**Claims**

1. A transparent yellow powder paint prepared by dispersing a charge controlling agent and a yellow colouring agent in a binder resin, wherein the charge controlling agent comprises a yellow dyestuff classified as C.I. solvent yellow 56 and/or C.I. solvent yellow 33 by color index.

2. A paint according to claim 1 wherein the yellow coloring agent comprises at least one of acetoacetic acid allylide monoazo pigments, acetoacetic acid allylide diazo pigments, benzimidazoline pigment, isoindoline pigment and fused azo pigments.

3. A paint according to claim 1 or 2 wherein the binder resin comprises a polyester resin.

4. A paint according to claim 1, 2 or 3 wherein the charge controlling agent additionally comprises a quarternary ammonium salt.

5. A paint comprising:

   (a) a binder,
   (b) a yellow coloring agent, and
   (c) a charge controlling agent comprising a yellow dyestuff.

6. A paint according to claim 5, in which the yellow dyestuff comprises a C.I. solvent yellow 56 dyestuff and/or a C. I. yellow 33 dyestuff as defined by color index.

7. A paint according to claim 5 or 6, in which the charge controlling agent additionally comprises a quarternatry ammonium salt.

8. A paint according to claim 5, 6 or 7 in which the coloring agent and the charge controlling agent are dispersed throughout the binder, the paint being in powder form.

European Patent Office

# EUROPEAN SEARCH REPORT

Application Number
EP 98 30 2958

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | DATABASE WPI<br>Section Ch, Week 9625<br>Derwent Publications Ltd., London, GB;<br>Class E21, AN 96-242792<br>XP002073007<br>& JP 08 095 303 A (MITA IND CO LTD)<br>* abstract *<br>--- | 1 | C09D5/03 |
| A | EP 0 315 083 A (HOECHST AG) 10 May 1989<br>----- | 4 | |

| TECHNICAL FIELDS SEARCHED (Int.Cl.6) |
|---|
| C09D<br>C09B |

The present search report has been drawn up for all claims

| Place of search | Date of completion of the search | Examiner |
|---|---|---|
| THE HAGUE | 29 July 1998 | Miller, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)